# EUROPÄISCHE PATENTANMELDUNG

(11) **EP 0 539 892 A1**
(43) Veröffentlichungstag der Anmeldung: **05.05.1993**
(21) Anmeldenummer: 92118244.0
(22) Anmeldetag: 24.10.1992
(51) Int. Cl.: C01B 7/19

(54) **Abtrennung von Wasser und/oder Kohlenwasserstoffen aus Fluorwasserstoff**

(30) Priorität: 31.10.1991 DE 4135917
(71) Anmelder: Solvay Fluor und Derivate GmbH, D-30173 Hannover (DE)
(72) Erfinder: Seseke-Koyro, Ulrich, W-3502 Vellmar (DE); Grossmann, Andreas, W-3163 Sehnde 2 (DE); Rudolph, Werner, W-3000 Hannover 71 (DE)
(74) Vertreter: Lauer, Dieter, Dr.

(57) **Zusammenfassung**

Beschrieben wird ein Verfahren zur Abtrennung von Wasser und/oder Kohlenstoffverbindungen aus Fluorwasserstoff unter Verwendung von elementarem Fluor.

## Beschreibung

Die Erfindung betrifft ein Verfahren zur Abtrennung von Wasser und/oder Kohlenwasserstoffen aus Fluorwasserstoff.

Fluorwasserstoff wird in der chemischen Industrie in großem Umfang verwendet, beispielsweise für die Herstellung von Fluor enthaltenden anorganischen oder organischen Verbindungen. Fluorwasserstoff in Form von Flußsäure wird beispielsweise als Ätzmittel verwendet. In einigen Anwendungsbereichen, beispielsweise in der Elektronik oder Optik, wird gereinigter Fluorwasserstoff benötigt, der im wesentlichen wasserfrei und/oder im wesentlichen frei von Kohlenwasserstoffen sein muß.

Aufgabe der vorliegenden Erfindung war es, ein Verfahren anzugeben, mit welchem Fluorwasserstoff erhalten werden kann, der im wesentlichen frei von Wasser und/oder Kohlenwasserstoffen ist. Diese Aufgabe wird durch das erfindungsgemäße Verfahren gelöst.

Das erfindungsgemäße Verfahren zur Abtrennung von Wasser und/oder Kohlenstoffverbindungen aus Fluorwasserstoff umfaßt das Kontaktieren des Fluorwasserstoffs mit elementarem Fluor.

Nach dem erfindungsgemäßen Verfahren kann man Wasser oder Kohlenstoffverbindungen aus Fluorwasserstoff einer mehr oder weniger großen Reinheit abtrennen. Zweckmäßig verwendet man das Verfahren auf Fluorwasserstoff einer Reinheit von mindestens 95 Gew.-% an.

Natürlich kann man mit dem erfindungsgemäßen Verfahren Fluorwasserstoff reinigen, der eine Kohlenstoffverbindung oder aber ein Gemisch von mehreren Kohlenstoffverbindungen enthält.

Der Begriff "Kohlenstoffverbindungen" umfaßt vorzugsweise organische Kohlenstoffverbindungen, insbesondere Kohlenwasserstoffe, beispielsweise aliphatische, cycloaliphatische oder aromatische Kohlenwasserstoffe sowie einfach oder mehrfach substituierte aliphatische, cyclische oder aromatische Kohlenwasserstoffe. Beispielsweise lassen sich aliphatische Kohlenwasserstoffe wie Methan, Ethan, Propan, Butan, Pentan oder Hexan, cyclische Kohlenwasserstoffe wie Cyclohexan oder Methylcyclohexan sowie aromatische Kohlenwasserstoffe wie Benzol, Toluol, Xylol oder Mesitylen abtrennen.

Kohlenstoffverbindungen mit Heteroatomen können ebenfalls abgetrennt werden. Beispielsweise können durch ein oder mehrere Halogenatome oder durch ein oder mehrere Substituenten mit Heteroatomen substituierte aliphatische, cyclische oder aromatische Kohlenwasserstoffe oder Kohlenwasserstoffe mit einem oder mehreren Heteroatomen in der Kohlenstoffkette ebenfalls abgetrennt werden.

Das im zu reinigenden Fluorwasserstoff vorhandene Wasser wird mit elementarem Fluor zu Fluorwasserstoff und Sauerstoff zersetzt. Kohlenstoffverbindungen werden gewöhnlich zu fluorierten Methanen abgebaut. Kohlenwasserstoffe beispielsweise werden zu Tetrafluorkohlenstoff umgesetzt. Halogenierte Kohlenstoffverbindungen reagieren zu Fluor und Halogen enthaltenden Methanverbindungen.

Zweckmäßig wird das elementare Fluor mindestens in der stöchiometrisch zur vollständigen Abtrennung des enthaltenen Wassers und/oder der enthaltenen Kohlenstoffverbindung bzw. Kohlenstoffverbindungen eingesetzt. Vorzugsweise setzt man das Fluor in einem Überschuß ein, beispielsweise in der 2- bis 8-fachen Menge der stöchiometrisch zur Abtrennung von Wasser bzw. Kohlenstoffverbindungen und gegebenenfalls anderen Verunreinigungen benötigten Menge.

Das Fluor kann man in reiner Form oder als Mischung mit einem Inertgas in das Verfahren einbringen. Beispielsweise kann man Gemische von Fluor und einem Edelgas oder Stickstoff verwenden. Darüber hinaus ist es möglich, auch Gemische von Fluor und Fluorwasserstoff einzusetzen.

Das erfindungsgemäße Verfahren führt man zweckmäßig bei einer Temperatur zwischen -20 °C und 150 °C, vorzugsweise zwischen 20 °C und 100 °C durch.

Man kann das Verfahren bei Unterdruck, Umgebungsdruck und Überdruck durchführen. Beispielsweise kann man bei einem Druck von 0,5 bis 10 bar und höher arbeiten. Zweckmäßigerweise arbeitet man entweder bei Umgebungsdruck oder bei Überdruck, beispielsweise in einem Bereich von Umgebungsdruck bis 7 bar.

Die insbesondere aus Kohlenstoffverbindungen entstehenden Abbauprodukte können bei einer anschließenden Destillation oder sogar durch bloßes Anlegen eines Unterdruckes aus dem gereinigten Fluorwasserstoff abgetrennt werden.

Der nach dem erfindungsgemäßen Verfahren erhältliche gereinigte Fluorwasserstoff kann als solcher in der Elektronikindustrie verwendet werden. Zweckmäßig füllt man ihn dann nach der Durchführung des erfindungsgemäßen Verfahrens in entsprechende Gasflaschen ab. Selbstverständlich kann man den erfindungsgemäß gereinigten Fluorwasserstoff auch zur Herstellung von Flußsäure verwenden. Hierzu mischt man den erfindungsgemäß gereinigten Fluorwasserstoff mit entsprechend reinem Wasser und erhält dann eine mehr oder weniger konzentrierte Flußsäure, die im wesentlichen frei von Kohlenstoffverbindungen ist.

Darüber hinaus kann man den nach dem erfindungemäßen Verfahren gereinigten Fluorwasserstoff auch als Zwischenprodukt für die Herstellung von Fluorverbindungen verwenden. Beispielsweise kann man hochreine Fluoride oder Fluor enthaltende Kohlenstoffverbindungen nach an sich üblichen Verfahren unter Verwendung des nach dem erfindungsgemäßen Verfahren erhältlichen hochreinen Fluorwasserstoffs herstellen.

Erstmalig kann der Gehalt an Wasser und (organischen) Kohlenstoffverbindungen in Fluorwasserstoff in einfacher Weise auf sehr geringe Werte, bis hin zur Nachweisgrenze, verringert werden.

Die folgenden Beispiele sollen das erfindungsgemäße Verfahren weiter erläutern, ohne es in seinem Umfang einzuschränken.

### Beispiel 1:

Reinigung von Fluorwasserstoff bei Umgebungsdruck.
Als Apparatur wurde eine Einheit verwendet, die aus einem Reaktionsgefäß bestand, das mit aufgesetztem Rückflußkühler und Destillationsaufsatz versehen war. In das Reaktionsgefäß wurden 1.000 g technisches Fluorwasserstoffgas kondensiert. Die Reinheit des Fluorwasserstoffs an HF betrug 99,99 Gew.-%. Der Fluorwasserstoff enthielt als Verunreinigungen 80 ppm Wasser, 20 ppm Schwefel als Sulfat und etwa 500 ppm Arsen. Die Summe der metallischen Verunreinigungen betrug etwa 10 ppm. Zu Testzwecken war das Fluorwasserstoffgas mit 10 ppm n-Pentan dotiert. In das Reaktionsgefäß wurden dann noch 7.500 ppm Lithiumfluorid eingegeben. In das Reaktionsgemisch wurde dann ein Gemisch aus Stickstoff und Fluor (Volumenverhältnis von Stickstoff zu Fluor etwa 9:1) eingeleitet. Die eingeleitete Gesamtmenge an Fluor betrug etwa 0,16 Mol. Die stöchiometrisch benötigte Menge wäre etwa 0,03 Mol gewesen. Nach Beendigung der Einleitung wurde der Fluorwasserstoff destilliert und anschließend analysiert. Der Wassergehalt wurde nach der Methode von Karl-Fischer untersucht, die übrigen Bestandteile mittels ICP (Inductive Coupled Plasma), GF-AAS (Graphite Furnace Atomic Absorption Spektr.) und durch Headspace-Gaschromatographie, gekoppelt mit Massenspektroskopie (GC-MS) untersucht. Der Gehalt an Wasser sowie den anderen Verunreinigungen lag jeweils unterhalb der Nachweisgrenze.

### Beispiel 2:

Reinigung von Fluorwasserstoff mit Fluor unter Druck.
Als Apparatur wurde diesmal ein Druckzylinder mit 3,8 l Rauminhalt verwendet. Dieser Druckzylinder war verschließbar und über eine absperrbare Leitung mit einer Destillationsvorrichtung verbunden.
In den Druckzylinder wurden 2 l technischer Fluorwasserstoff eingefüllt. Dieser Fluorwasserstoff wies die gleiche Zusammensetzung wie der in Beispiel 1 verwendete Fluorwasserstoff auf. In den Druckzylinder wurde dann Lithiumfluorid eingegeben, bis der Gehalt an Lithiumfluorid etwa 15.000 ppm betrug. Der Zylinder wurde anschließend mit elementaren Fluor beaufschlagt, bis der Druck im Zylinder etwa 5,3 bar betrug. Es war dann etwa 0,43 Mol F₂ im Druckzylinder vorhanden; die stöchiometrisch benötigte Menge wäre 0,06 Mol. Der Inhalt des Druckzylinders wurde dann auf etwa 100 °C gebracht und 12 Stunden lang bei dieser Temperatur gehalten. Zur besseren Durchmischung wurde der Druckzylinder mechanisch hin und her bewegt. Der Druckzylinder wurde dann auf Raumtemperatur abgekühlt und leichtflüchtige Bestandteile abgelassen. Anschließend wurde der Inhalt des Druckzylinders destilliert. Das Destillat wurde wiederum analysiert. Der Gehalt an Wasser und Kohlenstoffverbindungen war kleiner als 1 ppm. Auch die übrigen Verunreinigungen waren nur noch in geringsten Spurenkonzentrationen vorhanden. Die Konzentration an Sulfat war beispielsweise kleiner als 0,1 ppm, die Konzentration an Arsen war kleiner als 0,001 ppm und die Konzentration an metallischen Verunreinigungen war kleiner als 0,005 ppm.

### Beispiel 3:

Beispiel 2 wurde wiederholt. Diesmal wurde jedoch kein Lithiumfluorid zugesetzt. Der erhaltene Fluorwasserstoff entsprach in seiner Reinheit in Bezug auf den Gehalt an Wasser und Kohlenstoffverbindungen dem in Beispiel 2 erhaltenen Produkt.

## Patentansprüche

1. Verfahren zur Abtrennung von Wasser und/oder Kohlenstoffverbindungen aus Fluorwasserstoff, wobei man den Fluorwasserstoff mit elementarem Fluor kontaktiert.

2. Verfahren nach Anspruch 1, dadurch gekennzeichnet, daß man das Fluor in der 2- bis 8-fachen Menge der stöchiometrisch zur Abtrennung von Wasser und Kohlenstoffverbindungen benötigten Menge einsetzt.

3. Verfahren nach Anspruch 1 oder 2, dadurch gekennzeichnet, daß man die Kontaktierung von Fluorwasserstoff und Fluor bei einer Temperatur zwischen -20 °C und 150 °C durchführt.

4. Verfahren zur Herstellung von Flußsäure, die im wesentlichen frei von Kohlenstoffverbindungen ist, dadurch gekennzeichnet, daß man nach einem Verfahren der Ansprüche 1 bis 3 gereinigten Fluorwasserstoff mit Wasser vermischt.

5. Verfahren zur Herstellung von Fluor enthaltenden Verbindungen, dadurch gekennzeichnet, daß man bei ihrer Herstellung nach einem Verfahren der Ansprüche 1 bis 3 gereinigten Fluorwasserstoff verwendet.
